# EUROPEAN PATENT APPLICATION

(11) **EP 2 587 440 A1**
(43) Date of publication of application: **01.05.2013**
(21) Application number: 11194357.7
(22) Date of filing: 19.12.2011
(51) Int. Cl.: G06Q 40/02

(54) **Banking system**

(30) Priority: 25.10.2011 IN MU30302011
(71) Applicant: Tata Consultancy Services Limited, Maharashtra (IN)
(72) Inventor: Agarwal, Rahul, 122001 Gurgaon (IN); Goel, Vipin, 122001 Gurgaon (IN)
(74) Representative: Danner, Stefan

(57) **Abstract**

The present subject matter relates to a banking system, which includes a parsing module **(212)** to parse a number of positions corresponding to at least one registered entity. A position processing module **(108)** is configured to categorize each of the positions into a set of payables and receivables based on a credit or debit nature of each of the positions. A display module **(214)** is configured to provide an integrated view to display the set of payables and receivables.

## Description

### TECHNICAL FIELD

The present subject matter relates to banking system and in particular relates to management of positions in the banking system.

### BACKGROUND

As known in the art, an investment bank (IB), unlike a custodian or a fund manager, has counterparts and not clients as its customers. Accordingly, an operation of the IB system does not involve knowledge of the identity of the end clients and end counterparties whom the IB is dealing with. Conventional IB systems do not have a facility to directly map accounts associated with the IB with the account of the end client / shareholder.

The IB system providing global services has to interact with multiple position keeping systems in different markets and requires maintenance of such different types of positions that are related to equities. One of the important aspects of the management of positions is to classify such positions as either receivables (to be received from counterparties) or payables (to be paid to counterparties). In order to have a successful closure/disbursement within the IB system, the gross payables and gross receivables has to match.

### SUMMARY

This summary is provided to introduce concepts related to management of positions in a banking system. These concepts are further described below in the detailed description. This summary is not intended to identify essential features of the claimed subject matter nor is it intended for use in determining or limiting the scope of the claimed subject matter.

The present subject matter describes management of positions of registered counterparties in the banking system. Such type of management includes receipt of a number of positions corresponding to at least one registered entity from a number of position keeping systems. Each of such positions is classified in a banking system into a set of payables and receivables, based on a credit or debit nature of the position. Further, an integrated view of the set of payables and receivables is configured in the banking system. Finally, at least one position categorized into the set of payables is linked with at least one position categorized into the set of receivables.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.

**Fig. 1** illustrates an exemplary network environment implementing an investment banking system, in accordance with an embodiment of the present subject matter.

**Fig. 2** illustrates an exemplary investment banking system, in accordance with an embodiment of the present subject matter.

**Fig. 3** illustrates an exemplary method for managing positions of registered counterparties, according to one embodiment of the present subject matter.

### DETAILED DESCRIPTION OF THE DRAWINGS

As a result of a non-coordination between the counterparty and an investment bank (IB), a conventional reconciliation or linking between payables and receivables to finally match the gross receivables and the gross payables is performed manually by professionals of the IB. The professional refers various screens that give a view of different position types and applying any particular logical reasoning to link them with each other. In other words, the linking or reconciliation between payables & receivables is manually performed outside an IT enabled computing environment. Even in cases where the IB may employ a computing system such as a software based banking application to carry out the day to day operation of the IB, reconciliation activities largely remain manual.

Such manual operations range from referring to multiple screens for compilation and assimilation of the data. Accordingly, a lot of time is incurred on these efforts, thereby leading to an unnecessary complexity. Such kind of working mechanism is also more vulnerable to suffer from errors due to human fatigue and inconsistent practices.

The present subject matter describes a banking system to prevent the aforementioned manual operation required for performing position linking/reconciliation. The banking system facilitates the professionals of the IB or other business professionals to have a comprehensive and integrated view of overall payables & receivables that need to be linked for the linking/reconciliation. The banking system provides for linking corresponding payables and receivables in a time effective manner and substantially reduces the human effort involved in the process.

The banking system described herein can be implemented in a variety of entities, such as computing systems or devices, and communication systems or devices. The entities that can implement the described method(s) include, but are not limited to, a desktop computer, a laptop, a mainframe computer, a server, and the like.

The banking system captures positions relating to one or more entities registered with the IB from a variety of position keeping systems. Based on a key few attributes of the positions like a credit or debit nature of each of the position, each position is identified as a payable position or a receivable position.

Thus the banking system classifies and stores various types of positions received from multiple position keeping systems into payables and receivable categories. Post classification and storage, a user interface of the banking system configures an integrated view of the payables and receivable to allow a user to comprehensively see all the stored payables and receivables placed adjacently within the same screen of the banking system. Thus the user interface allows the user to achieve an integrated view of the receivables and payables without having to refer multiple screens. In addition, the integrated view allows for the professionals to link or unlink associated positions in the payables and receivable categories in the run time.

In one embodiment, the integrated views can be configured in different forms based on three types of characteristics associated with the positions, which include a deadline date, an exercised quantity, a net rate, etc. Accordingly, selection of any of the characteristics enables the users to observe the integrated view of the payables and receivables with respect to the selected characteristic. For example, selecting the deadline date as an option arranges the payables and receivables with respect to the deadline dates for each payable and receivable. Similarly, the payables and receivables can be arranged within the integrated view based on net rate or the exercised quantity.

Based on any of the views selected, each of the positions, classified in the payables and receivable categories, get arranged accordingly. The users may then link one or more position classified in the receivable category with one or more position classified in the payable category, and vice versa. In an example, one receivable can be linked with a number, say 10, of payables or one payable can be linked with a number say 10 of receivables based on the aforementioned characteristics. Further, the users are allowed to unlink the already linked positions or newly linked positions as per on his/her discretion.

The banking system saves a lot of time and effort otherwise required to manually manage the receivables and payables in a conventional banking system of an IB. In addition, the banking system is configured to deal with positions associated with all possible financial instruments like equities, securities, stocks, shares, etc, belonging to the counterparties. Accordingly, the present banking system is universally operable. Further, the banking system configures an integrated view of the set of payables and receivables so that a user is allowed to link and unlink payables and receivable positions in run time.

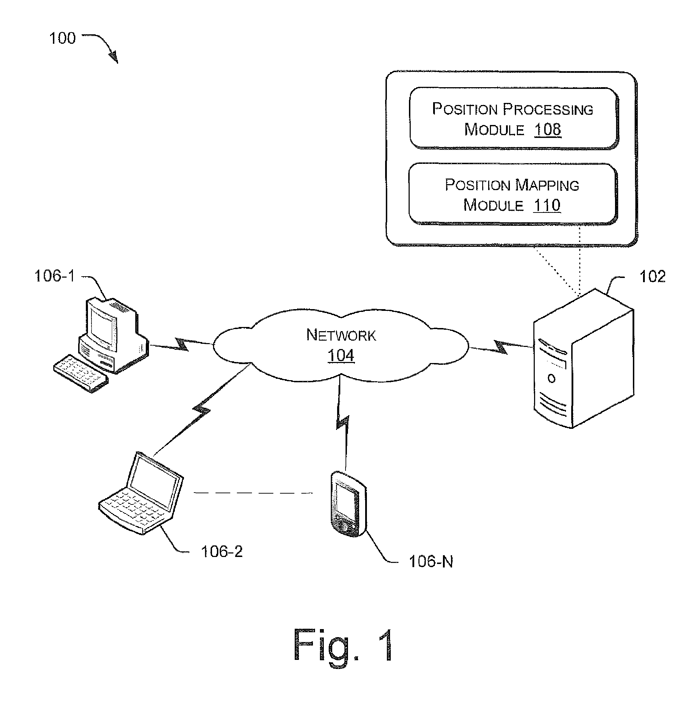

The manner in which the banking system is implemented shall be explained in detail with respect to the **Figs. 1-3****.** While aspects of the systems and methods can be implemented in any number of different computing systems environments, and/or configurations, the embodiments are described in the context of the following exemplary system architecture(s).

**Fig. 1** shows an exemplary network environment **100** implementing a banking system **102** for managing positions related to financial equities, in accordance with an embodiment of the present subject matter. The banking system **102** may be interchangeably referred to as an investment banking system **102.** In an implementation, the banking system **102** can be implemented in an investment bank (IB) and operate in the network environment **100.** In one embodiment, the banking system **102** as described herein receives positions belonging to different registered business entities or counterparties from various position-keeping systems and categorizes the positions into receivables and payables. A position categorized into the receivable category is also referred to as a receivable position or simply, a receivable hereinafter. Similarly, a position categorized into the payable category is referred to as a payable position or a payable. In one embodiment, the banking system **102** may present different types of integrated views of the receivables and the payables and provides for linking of the payables and receivables with each other. In other embodiment, the different integrated views may be presented to users for performing the linking process.

In the network environment **100** the banking system **102,** communicates, via a network **104,** with various client devices **106-1, 106-2,** to **106-N.** The client devices **106-1, 106-2,** to **106-N** are hereinafter collectively referred to as client devices **106.** The banking system **102** and the client devices **106** may communicate for various purposes. For example, the user or a business professional may use the client device **106-1** to upload positions related to various registered entities or registered counterparties, thereby requesting the banking system **102** to determine corresponding payables and receivables. In another example, the banking system **102** may communicate with a remotely located client device **106,** such as the client device **106-2** to provide integrated views of payables and receivables to the client device **106-2.** In said example, the client device **106-2** may further use the received integrated views to link the payables and receivables with each other.

The network **104** may be implemented as a wireless network, wired network or a combination thereof. The network **104** can be implemented as one of the different types of networks such as intranet, local area network (LAN), wide area network (WAN), and the internet. The network **104** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the network **104** may include network devices, such as network switches, hubs, routers and host bus adaptors (HBAs), for providing a link between the banking system **102** and the client devices **106.** The network devices within the network **104** may interact with the banking system **102** and the client devices **106** through communication links.

The banking system **102** and the client devices **106** can be implemented in a variety of entities, such as communication, and computing systems or devices. For example, the banking system **102** may be implemented in a variety of computing devices including, for example, a server, a desktop PC, a notebook or a portable computer, a workstation, a mainframe computer, or an internet appliance. Similarly, examples of the client devices **106** may include, but are not limited to, desktop computers, handheld devices, laptops or other portable computers, tablet computers, mobile phones, PDAs, smartphones, and the like.

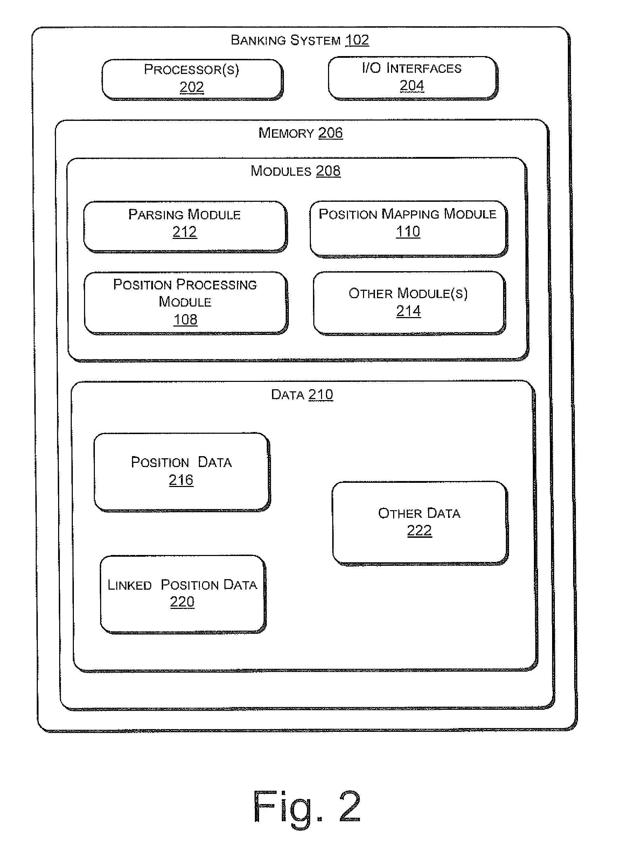

In an embodiment, the banking system **102** includes a parsing module (shown in **Fig. 2****)** configured to receive the position of the entities registered with the IB. Such positions are receives from various position keeping systems corresponding to the registered entities. The parsing module is configured to parse the received positions to determine a credit or a debit nature associated with each of the positions.

In an example, the positions may be related to shares, capital, securities, stocks as possessed by any registered counterparty or entity, say company A. Similarly, each of the registered counterparties, for example, company B, company C, and company D have a number of positions. Consider an example where company A buys some securities from the company B and company C and agrees to pay a figure worth 10 million USD and 5 million USD to the company B and the company C, respectively. In addition, the company D buys stocks worth 20 million USD from the company A. In the present example, the figure worth 15 million USD and 20 million USD may be considered two separate positions related to the company A. Whereas, the company B and C have positions worth 10 million USD and 5 million USD, respectively. The company D has a single position worth 20 million USD.

Continuing with the example, it may be understood the promise of company A to pay 15 million USD amongst which 10 million USD and 5 million USD are owed to the company B and the company C, respectively, a right of the company B to receive the 10 million USD, a right of the company C to receive the 5 million USD, a promise of the company D to pay 20 million USD, and a right of the company A to receive the 20 million USD reflect either the credit or debit nature associated with the positions of these companies. In other words, it may be said that a particular position has either a credit or debit nature associated with it. In a scenario, when the company A is liable to pay 10 million USD to B and 5 million USD to C in respect of the position worth 15 million USD, it may be considered that there are two debit natured events associated with one position. Likewise, there can be other separate positions and corresponding credit or debit natured events associated with all the companies either in relation to transactions with each other or transactions with other registered counterparties.

Further, the parsing module extracts positions of different counterparties and assesses a credit or a debit nature of each of the positions. Based on this assessment, another module of the banking system **102,** which is a position processing module **108,** classifies the positions either into payables or receivables. In other words, each position is either identified as an amount to be paid or an amount to be received.

Now, the classified payables and receivables are arranged adjacently in an integrated view by a display module (not shown in the figure). Such integrated view may be in the form of a table, a spreadsheet, etc. Further, a position mapping module **110** enables the user to operate upon the integrated view by linking the positions and receivables with each other. In other words, as the user observes the columns of payables and receivables in a table like format, the user is provided with an option to match or link a payable with one or more receivables and vice versa.

Continuing with the aforementioned example, the integrated view of the payables and receivables associated with company A, B, C and D as presented by the display module will be of a following form. However, it may be understood that the format of the following table shall not be construed as limiting and the following table may be extended to cover various other formats. For sake of clarity, the following table, Table 1, has been presented in the following format.

**Table 1**

| Payables | | | | Receivables | | | |
|---|---|---|---|---|---|---|---|
| Figure (million USD) | Deadline Date | Exercised quantity | Net Rate | Figure (million USD) | Deadline Date | Exercised quantity | Net Rate |
| 15 | 28/7/11 | 300 | 11 | 10 | 28/7/11 | 200 | 11 |
| 20 | 5/8/11 | 500 | 15 | 5 | 28/711 | 100 | 11 |
| | | | | 20 | 5/8/11 | 500 | 15 |

Now based upon various characteristics associated with the each of the payables and receivables, the user links one payable with at least one receivable. In the aforementioned tables, the payable worth 20 million and the receivable worth 20 million are part of the same transaction. Accordingly, the user can link the payable with the receivable, thereby linking one position with another. Apart from transaction identifier, there may be other types of characteristics like deadline date, an exercised quantity and so on for linking purposes. As a result, one position may be linked with at least one another position.

As the list of payables and receivables may be huge, a user interface, such as a display module of the banking system **102** presents the integrated views in different forms so as to simplify the further linking process. Each of such different forms of views presents a certain key attributes and certain view specific attributes belonging to all payable and receivable positions. **102.** In this manner, the user can choose any of the forms to represent integrated views and then link payables to receivables in one attempt, thereby simplifying the linking procedure. In other words, the user is facilitated to link payables and receivables at a particular instant either all at once or postpone the linking of some payables and receivables for a later point of time

Without limiting the scope, the present subject matter may be extended to cover other and more than the three aforementioned characteristics associated with the positions. In addition, the user is facilitated to unlink the already linked positions in case of wrongful linking or a change in the status of the positions with time. Such change may be in terms of the numerical figure associated with the positions. Like the linking, the un-linking may also be performed in accordance with selection of any of the aforementioned views.

**Fig. 2** illustrates exemplary components of the banking system 102, in accordance with an embodiment of the present subject matter. In said embodiment, the banking system **102** includes a processor **202,** I/O interface(s) **204,** and a memory **206.** The processor **202** is coupled to the memory **206.** The processor **202** may be implemented as one or more microprocessors, microcontrollers, digital signal processors, central processing units, state machines, logic circuitries, and/or any devices that manipulate signals based on operational instructions. Among other capabilities, the processor **202** is configured to fetch and execute computer-readable instructions stored in the memory **206.**

The I/O interface(s) **204** may include a variety of software and hardware interfaces, for example, a web interface allowing the banking system **102** to interact with the client devices **106.** Further, the interface(s) **204** may enable the banking system **102** to communicate with other computing devices, such as web servers and external repositories or databases. The interface(s) **204** can facilitate multiple communications within a wide variety of networks and protocol types, including wired networks, for example LAN, cable, etc., and wireless networks such as WLAN, cellular, or satellite. The interface(s) **204** may include one or more ports for connecting a number of computing devices to each other or to another server.

The memory **206** can include any computer-readable medium known in the art including, for example, volatile memory (e.g., RAM), and/or non-volatile memory (e.g., EPROM, flash memory, etc.). The memory **206** includes one or more module(s) **208** and data **210.** In one embodiment, the modules **208** further include a parsing module **212,** a position processing module **108,** a position mapping module **110** and other module(s) **214.** In an implementation, the display module acts as one of the constituent modules of the other module(s) **214.**

The data **210** serves, amongst other things, as a repository for storing data processed, received and generated by the one or more of the module(s) **208.** It may be mentioned that the data **210** includes position data **216,** linked position data **220** and other data **222.**

In operation, the parsing module **212** obtains a number of positions associated with a set of registered business entities or counterparties. In an example, such business entities are registered with an investment bank that implements the banking system **102.** Specifically, the parsing module **212** receives the positions from various position keeping systems corresponding to the business entities. The positions are stored within the position data 216.

Further, the parsing module **212** parses the positions to determine a credit or debit nature of each of the positions. Further, the position processing module **108** identifies each position as either payable or receivable based on the credit or debit nature of each of the position.

Further, the display module **214** presents an integrated view of the payables and receivable by showcasing the payables and the receivables in the form a table or a spreadsheet. Further, the integrated view as presented by the display module **214** may be seen by a user in different forms, depending upon selection of any one characteristic out of the three characteristics. Such characteristics are related to each of the positions and include transaction related parameters of the corresponding positions. In an implementation, the characteristics are a deadline date, an exercised quantity and a net rate.

Further, the integrated view helps the user in further linking the payables with receivables. Such linking is facilitated by the position mapping module **110.** Based upon various characteristics associated with the payables and receivables, like the deadline date, the net rate, etc, the user maps a particular payable with at least one receivable and vice versa also. The linked payables and receivables may be stored within the linked position data **220.** Similar to linking, the user may unlink the linked payables and receivables. The need of unlinking arises due to any change or update in numerical figures associated with the positions with time. The unlinked positions are then re-stored inside the position data **216.**

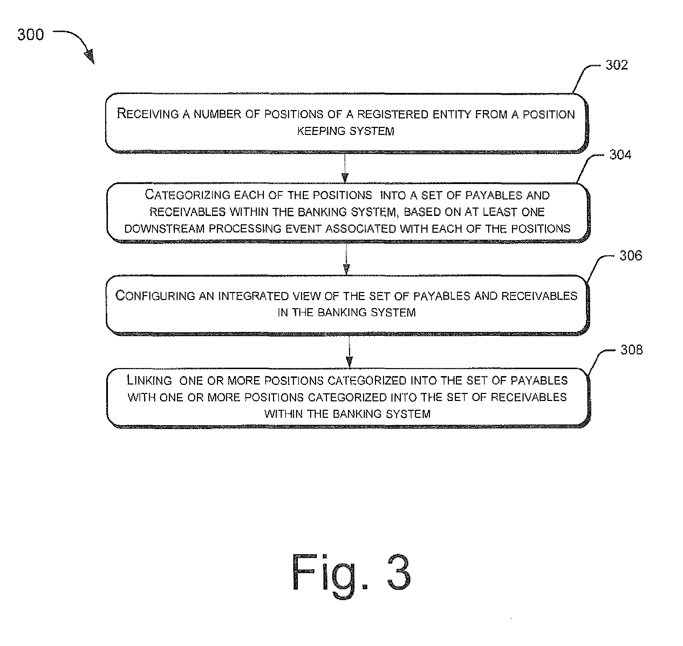

**Fig. 3** illustrates an exemplary method **300** for managing positions in the banking system **102,** in accordance with the present subject matter. The exemplary method **300** may be described in the general context of computer executable instructions and may be a computer implementable method. Generally, computer executable instructions can include routines, programs, objects, components, data structures, procedures, modules, functions and the like that perform particular functions or implement particular abstract data types. The method may also be practiced in a distributed computing environment where functions are performed by remote processing devices that are linked through a communication network. In a distributed computing environment, computer executable instructions may be located in both local and remote computer storage media, including memory storage devices.

The order in which the method **300** is described is not intended to be construed as a limitation, and any number of the described method blocks can be combined in any order to implement the method, or an alternate method. Additionally, individual blocks may be deleted from the method without departing from the spirit and scope of the subject matter described herein. Furthermore, the method can be implemented in any suitable hardware, software, firmware, or a combination thereof.

In accordance with one embodiment of the present subject matter, the method 300 may be implemented in the previously described banking system **102.** However, it will be appreciated by one skilled in the art that such an embodiment is not limiting. The method 300 may be implemented in a variety of similar banking systems.

The method **300** is initiated at block **302** upon the receipt of at least one position of a registered business entity within the banking system **102.** As mentioned before, such positions are provided by a position keeping system corresponding to the business entity.

Further, at block **304,** each of the positions is categorized either into a payable or a receivable within the banking system **102,** depending mainly upon the credit nature of a debit nature of each of the positions. Accordingly, based upon such nature, the categorization of each of the positions into either payables or receivables takes place.

Further, at block **306,** an integrated view of the set of payables and receivables is configured within the banking system **102.** As mentioned before, such view may be presented in at least three different forms based on the characteristics associated with the payables and receivables. These characteristics are a deadline date, a net rate, and an exercised quantity.

Finally, at block **308,** the positions categorized into the set of payables are linked with the positions categorized into the set of receivables within the banking system 102. As mentioned before, such linking is based on the characteristics corresponding to the payables and receivables.

The banking system **102** as described by the present subject matter facilitates a preservation of a lot of time and effort other wise required to manually manage the receivables and payables in the investment bank. In addition, the banking system **102** is configured to deal with positions associated with all possible financial instruments like equities, securities, stocks, shares, etc, belonging to the counterparty. As a result, the present banking system **102** incorporated within any investment bank is universally operable.

Although embodiments for testing have been described in language specific to structural features and/or methods, it is to be understood that the present subject matter is not necessarily limited to the specific features or methods described. Rather, the specific features and methods are disclosed as exemplary embodiments for the banking system **102** in an investment bank.

## Claims

1. A computer implemented method of maintaining equity positions, the method comprising:
receiving, by a banking system, a plurality of positions corresponding to at least one registered entity from at least one position keeping system;
categorizing each of the plurality of positions in the banking system into a set of payables and receivables based on a credit or debit nature of each of the positions;
configuring an integrated view of the set of payables and receivables in the banking system; and
linking at least one position categorized into the set of payables with at least one position categorized into the set of receivables in the banking system.

2. The method as claimed in claim 1, wherein the configuring the integrated view comprises depicting at least one characteristic of each of the positions.

3. The method as claimed in claim 2, wherein the at least one characteristic is one of a deadline date, an exercised quantity and a net rate.

4. The method as claimed in claim 3, wherein the linking comprises linking the at least one position categorized into the set of payables with at least one position categorized into the set of receivables in the banking system, the linking being based on the at least once characteristic of each of the positions.

5. The method as claimed in claim 1, further comprising un-linking the at least one position categorized into the set of payables linked with at least one position categorized into the set of receivables.

6. A banking system **(102)** comprising:
a processor **(202);**
a memory **(206)** coupled to the processor **(202),** the memory **(206)** comprising:
a parsing module **(212)** to parse a plurality of positions corresponding to at least one registered entity, wherein the parsing module **(212)** determines a credit or debit nature associated with each of the plurality of positions; and
a position processing module **(108)** configured to categorize each of the plurality of positions into a set of payables and receivables based on the credit or debit nature associated with each of the plurality of positions.

7. The system **(102)** as claimed in claim 6, further comprising a display module **(214)** configured to provide an integrated view to display the set of payables and receivables.

8. The system **(102)** as claimed in claim 6 further comprising a position mapping module **(110)** configured to link at least one position categorized into the set of payables with at least one position categorized into the set of receivables.

9. The system **(102)** as claimed in claim 7, wherein the integrated view depicts at least one characteristic of each of the plurality of positions, and wherein the at least one characteristic is at least one of a deadline date, an exercised quantity and a net rate.

10. The system **(102)** as claimed in claim 6, wherein the position mapping module **(110)** links the at least one position categorized into the set of payables with at least one position categorized into the set of receivables in the banking system, the linking being based on the at least once characteristic of each of the positions.

11. The system **(102)** as claimed in claim 6, wherein the position mapping module **(110)** is configured to un-link the at least one position categorized into the set of payables linked with at least one position categorized into the set of receivables.

12. A computer-readable medium having embodied thereon a computer program for executing a method comprising:
receiving, by a banking system, a plurality of positions corresponding to at least one registered entity from at least one position keeping system;
categorizing each of the plurality of positions in the banking system into a set of payables and receivables based on a credit or debit nature of each of the positions;
configuring an integrated view of the set of payables and receivables in the banking system; and
linking at least one position categorized into the set of payables with at least one position categorized into the set of receivables in the banking system.

13. The computer-readable medium as claimed in claim 12, wherein the configuring the integrated view comprises depicting at least one characteristic of each of the positions.

14. The computer-readable medium as claimed in claim 13, wherein the at least one characteristic is one of a deadline date, an exercised quantity and a net rate.

15. The computer-readable medium as claimed in claim 12, further comprising un-linking the at least one position categorized into the set of payables linked with at least one position categorized into the set of receivables.
